Europäisches Patentamt

European Patent Office

Office européen des brevets

(11) Publication number: **0 344 851**
**A1**

## EUROPEAN PATENT APPLICATION

(21) Application number: 89201358.2

(22) Date of filing: 29.05.89

(51) Int. Cl.⁴: **B07B 1/15** , **B07B 1/50**

(30) Priority: 03.06.88 NL 8801438

(43) Date of publication of application:
06.12.89 Bulletin 89/49

(84) Designated Contracting States:
BE DE FR GB NL

(71) Applicant: MIEDEMA
LANDBOUWWERKTUIGENFABRIEK B.V.
P.O. Box 5
NL-8830 AA Winsum(NL)

(72) Inventor: Wondergem, Jan
Kleine Poellaan 39
NL-1435 GL Rijsenhout(NL)

(74) Representative: de Vries, Johannes Hendrik
Fokke et al
Octrooibureau Los en Stigter B.V. P.O. Box
20052
NL-1000 HB Amsterdam(NL)

(54) **Apparatus for sizing bulb and root crop.**

(57) An apparatus for sizing bulb and root crop, comprising a frame (1) surmounting a conveyor having a sorting surface (2). The sorting surface is provided with a plurality of sorting apertures (9) distributed over the area thereof. According to the invention there are provided push-out means (16, 17) as well as drive means (20, 22) for periodically introducing the push-out means into the apertures (9) from the bottom upwardly.

fig.2

## Apparatus for sizing bulb and root crop

The invention relates to an apparatus for sizing bulb and root crop, comprising a frame surmounting a conveyor having a sorting surface provided with a plurality of sorting apertures distributed over the area thereof.

With a known apparatus of this type (see NL-A-8602843), which is satisfactory by itself, the problem arises that, when elongated and slightly tapering bulb en root crop is sorted, there is a risk that bulbs or roots become jammed in the aperture which consequently becomes clogged. The efficiency of the apparatus decreases then.

It is the object of the invention to further improve the known apparatus and to remove the disadvantage mentioned above in an effective way.

For this purpose the apparatus according to the invention is characterized in that there are provided push-out means as well as drive means for periodically introducing the push-out means into the apertures from the bottom upwardly.

In this way the apertures can be cleared during operation of the apparatus since the push-out means push the bulbs or roots jammed in the respective apertures temporary upwardly. By the conveying movement of the conveyor and the permanent stream of bulbs or roots over it the bulbs or roots which are being urged upwardly will be carried along easily and will be passed again over the subsequent portion of the conveyor. If the shape of the push-out means is properly chosen they will also serve as cleaning means for the conveyor keeping the aperture free from dirt blockages and maintaining an exact sorting measure.

In an embodiment of the apparatus, wherein the apertures are distrubuted evenly in the direction of conveyance of the conveyor as well as in a direction perpendicular thereto, it is preferred that a number of elements provided with push-out means are arranged in a row under the conveyor surface, the row of elements being movable in a reciprocating manner parallel to the sorting surface in a direction perpendicular to said row of elements, the push-out means being caused to enter and leave said apertures during said movement.

Due to this measurement only one row of elements having push-out means is necessary for unclogging all apertures in the conveying surface. Herein the row of elements will always block one row of apertures and will release the other rows thereof.

It is advantageous if the elements provided with push-out means consist of gear wheels having blunt radial teeth, the gear wheels being arranged and journalled on a shaft supported transverse to the direction of conveyance, the teeth serving as push-out means coming successively into engagement with successive apertures when the gear wheels are rotated and the shaft is moved parallel to the direction of conveyance of the conveyor. Herein it is favourable when the gear wheels are mounted freely rotatable, and the shaft being drivable only in a reciprocating manner parallel to the direction of conveyance.

In this way simple and reliably operating push-out means are provided. By mounting the gear wheels freely rotatable the drive of the gear wheels can take place by means of the engagement of the teeth into the apertures of the sorting surface. This makes it possible to vary the pitch of the apertures in the direction of conveyance within certain limits without the need to adjust the drive of the gear wheels.

A simple drive of the push-out means is created when the drive means for the shaft of the gear wheels consist of a chain guided around sprocket wheels, the shaft being secured to a part of said chain and at least one sprocket wheel being reciprocatingly drivable by a reversible drive motor.

An automatic reciprocating movement of the shaft of the gear wheels can be effected if stop means are provided on the frame near both ends of the conveyor, the shaft of an abutment means being adapted to strike against said stop means, and a drive motor being provided with a cos $\phi$ - control causing the direction of rotation of the drive motor to reverse when the abutment means contacts one of the stop means.

In the embodiment of the apparatus in which the length of the conveyor is adjustable, an automatic adjustment of the travel or stroke of the shaft is obtained if the stop means are secured to the frame in such a manner that the distance between them changes together with the length of the conveyor.

The invention will hereafter be elucidated with reference to the drawing showing an embodiment of the invention by way of example.

Fig. 1 is a very schematic plan view of an embodiment of the apparatus for sizing bulb and root crop according to the invention.

Fig. 2 is a sectional view along the line II-II in fig. 1.

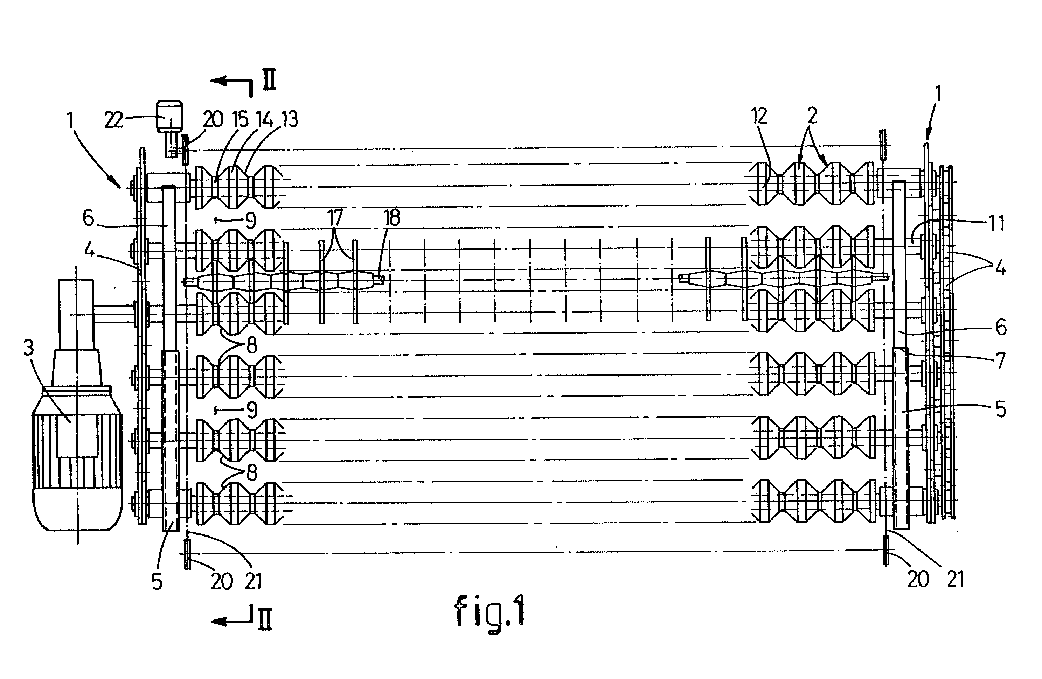

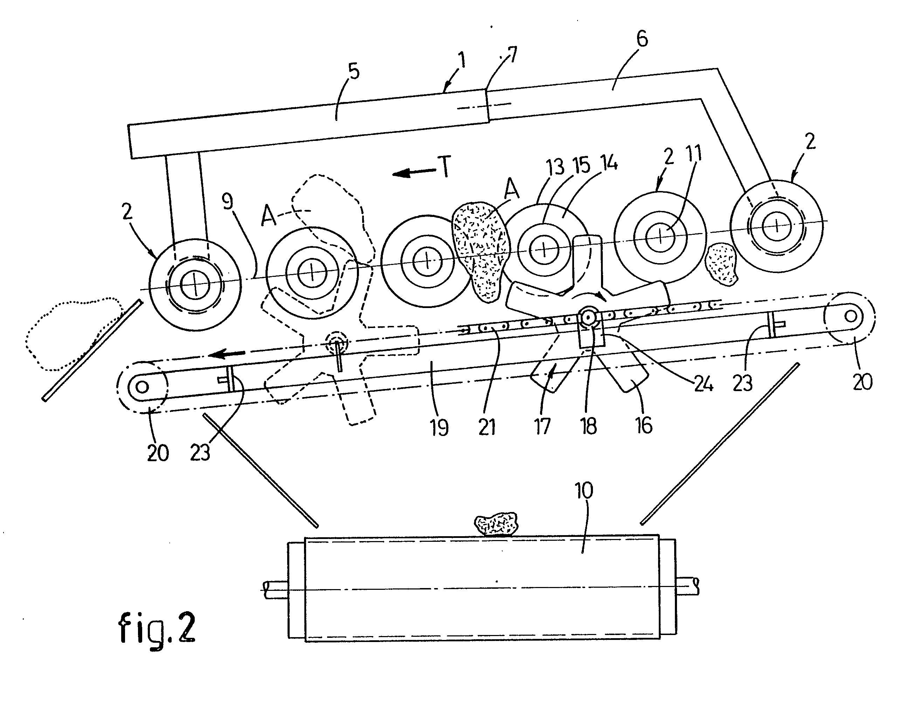

For the sake of clarity, the parts of the apparatus which are not necessary for a proper understanding of the invention are omitted in the drawing. The apparatus of fig. 1 and 2 comprises six rollers 2 journalled in a frame 1 and serving as sorting conveyor. The rollers 2 are arranged parallel at a short distance from each other and form a sorting and conveying surface inclining slightly downwardly with an angle to the horizontal in the direction of conveyance. The angle of inclination of the plane of the rollers 2 is adjustable in order to vary the capacity of the apparatus.

The drive of the rollers 2 is effected by means of a motor 3. It is known to cause a plurality of adjacently arranged rollers to rotate in a synchronized manner by means of a motor and this does not form part of the invention. Said drive is therefore only indicated by the coupling 4 in fig. 1. If desired, the rollers 2 may be journalled in a linkage frame or such structure so that the spacing between the rollers 2 can be varied and can be adjusted selectively. In the embodiment shown in the drawing this is in fact the case. In fig. 2 this is schematically indicated by the two frame parts 5 and 6 carrying the outer rollers 2 and being connected to each other at 7.

Any of the rollers 2 comprises notches 8. The notches 8 of adjacent rollers 2 are oppositely arranged in pairs. Furthermore the notches 8 are such that every boundary plane of a notch 8 extends substantially parallel to the boundary plane of the opposite wall of the oppositely directed notch 8. In this way the extended lines of intersection of said boundary planes with a plane extending through the axes of the rollers 2 form substantially a square at each pair of opposite notches 8. Every pair of opposite notches 8 determines, therefore, an aperture or passage 9 from the space above the rollers 2 to the space below the rollers 2. Through said apertures 9 objects are able to pass of which the diameter is not larger than the diameter of the inscribed circle of the square defined by each pair of notches 8. The latter diameter, of course, equals the distance between opposite sides of the square.

The distance between the rollers 2 can be varied, thereby varying the dimensions of the square defined by a pair of notches 8, and in this way the maximum diameter of objects which should be able to pass through the opening 9 can be altered.

By means of the apparatus objects, and more particularly bulb en root crop, such as potatoes, onions, red beets, tulip-bulbs and the like can be sized. For this purpose, it is for instance possible to arrange or built-in the apparatus in a row of processing apparatuses. At the input end adjacent the first roller 2 there is arranged, for example, a filling bunker and a roller screen coupled thereto. Potatoes or the like are supplied by the filling bunker. On the roller screen the supplied potatoes are cleared from earth and stones and from the roller screen they are deposited on the rollers 2. Since the rollers 2 are driven and rotated supplied potatoes move over the rows of rollers 2 to the opposite output end of the roller conveyor. Potatoes having a diameter smaller than the apertures 9 defined by the notches 8 (undersized potatoes) are caused to fall through the apertures 9 on their way over the roller conveyor. Under the conveyor of rollers 2 there is arranged a conveyor belt 10. The "undersized" potatoes falling through the apertures 9 can be discharged in that manner.

At the output end of the roller conveyor there is arranged another conveyor belt. Oversized potatoes, i.e. having dimensions too large to pass through the apertures 9 are carried at the output end onto said other conveyor belt. In the manner described a seperation is effected between "undersized" and "oversized" potatoes.

The rollers 2 of the apparatus are constructed of a central shaft 11, on which a plurality of wear-resistant plastic elements 12 are adjacently fixed as beads of a chain. Every element 12 consists of a cylindrical central part 13 and adjacent parts 14 having the shape of a cone frustrum. The cone-frustrum-shaped part 14 leads to a cylinder part 15 having a smaller diameter than the central part 13. The cilinder parts 15 of adjacent elements 12 abut and fill the opposite apexes (or bottoms) of the notches 8.

According to the invention the apparatus for sizing bulb and root crop is provided with push-out means, by means of which bulbs or roots jammed in the apertures 9 can be pushed out from below. The push-out means are constructed as blunt radial teeth 16 of gear wheels 17. Said gear wheels 17 are mounted on a shaft 18 extending parallel to and along the full width of the rollers 2. The number of gear wheels 17 corresponds to the number of apertures 9 between two adjacent rollers 2, wherein each gear wheel 17 coincides with the longitudinal plane through the diagonals of the respective square apertures 9 between the successive rollers 2. The ends of the shaft 18 are supported on a guide 19 provided on either side of the rollers 2 and forming a part of the frame 1, the guide 19 extending parallel to the plane through the axes of the rollers 2 and perpendicular to said axes. The shaft 18 and consequently the gear wheels 17 are movable in a reciprocating manner under the rollers 2 by means of chains 21 guided over sprocket-wheels 20, the respective ends of the shaft 18 being secured to the upper part of said chains 21. At least one of the mutually connected sprocket-wheels 20 may be driven by means of a suited reversible drive motor 22.

To the adjustable frame parts 5, 6 near the outer rollers 2 stop means 23 are fixed to which the shaft 18 or an abutment means 24 connected thereto can strike. Furthermore the drive motor 22 is provided with a cos $\phi$ -control causing the direction of rotation of the drive motor to reverse when the abutment means 24 contacts one of the stop means 23, so that there is obtained an automatic reciprocating movement of the shaft 18. When the mutual distance between the rollers 2 is adjusted by adjusting the frame parts 5 and 6 with respect to each other the distance between both stop means 23 and therefore the travel of the shaft 18 alters automatically.

The working of the push-out means is as follows. During operation of the apparatus the shaft 18 is reciprocatingly displaced by means of the driven chain 21. Of the teeth 16 serving as push-out means and belonging to each of the gear wheels 17 mounted on the shaft 18 always one tooth 16 projects into one of the apertures 9 between two adjacent rollers 2. The top of this tooth 16 extends to above the plane through the axes of the rollers 2. When the shaft 18 is moved in the direction of conveyance T (as indicated by arrows in fig. 2) or in reversed sense, the tooth 16 comes into contact with the respective cylindrical part 15 of the roller 2 to be passed. Since the gear wheel 17 is freely rotatable about the shaft 18, the gear wheel 17 is automatically turned about the shaft 18 by displacing said shaft, so that the next successive tooth 16 is forced into the next successive aperture 9. If there is a potato jammed in said aperture 9 (illustrated by the potato A drawn in full lines), said potato is pushed upwardly by said tooth 16 (indicated by the gear wheel 17 and potato A drawn in broken lines). Due to the rotation of the rollers 2 and the stream of potatoes over the rollers 2, the pushed out potato A is carried along easily over the next rollers 2. In this way the teeth 16 serving as push-out means are periodically introduced in the several apertures 9. In the embodiment shown there are as many teeth 16 on the gear wheel 17 as there are apertures 9 lying sucessively in the direction of conveyance. It is, however, also possible to choose a different number of teeth 16, wherein there should only be taken into account that always one tooth 16 extends between two adjacent rollers 2 and that the cylinder part 15 can be received between two adjacent teeth 16.

By choosing a suited shape of the teeth 16 they can serve not only as push-out means but also as scraping means for the rollers 2, thereby preventing obstructions of the apertures 9 and maintaining an exact sorting size of the aperture 9 defined by the notches 8 of the rollers 2.

From the foregoing it will be clear that the invention provides an apparatus for sizing bulb and root crop which is very reliable and operates accurate and wherein no failures due to obstructions occur.

The invention is not restricted to the embodiment shown in the drawing which can be varied in different ways within the scope of the invention.

## Claims

1. Apparatus for sizing bulb and root crop, comprising a frame surmounting a conveyor having a sorting surface provided with a plurality of sorting apertures distributed over the area thereof, **characterized** in that there are provided push-out means as well as drive means for periodically introducing the push-out means into the apertures from the bottom upwardly.

2. Apparatus according to claim 1, wherein the apertures are distrubuted evenly in the direction of conveyance of the conveyor as well as in a direction perpendicular thereto, **characterized** in that a number of elements provided with push-out means are arranged in a row under the conveyor surface, the row of elements being movable in a reciprocating manner parallel to the sorting surface in a direction perpendicular to said row of elements, the push-out means being caused to enter and leave said apertures during said movement.

3. Apparatus according to claim 2, **characterized** in that the elements provided with push-out means consist of gear wheels having blunt radial teeth, the gear wheels being arranged and journalled on a shaft supported transverse to the direction of conveyance, the teeth serving as push-out means coming successively into engagement with successive apertures when the gear wheels are rotated and the shaft is moved parallel to the direction of conveyance of the conveyor.

4. Apparatus according to claim 3, **characterized** in that the gear wheels are mounted freely rotatable, and the shaft being drivable only in a reciprocating manner parallel to the direction of conveyance.

5. Apparatus according to claim 4, **characterized** in that the drive means for the shaft of the gear wheels consist of a chain guided around sprocket wheels, the shaft being secured to a part of said chain and at least one sprocket wheel being reciprocatingly drivable by a reversible drive motor.

6. Apparatus according to claim 4 or 5, **characterized** in that a guide is provided on either side of the conveyor at a distance therebelow and extending substantially parallel to the sorting surface in the direction of conveyance, the ends of the shaft being movable along said guide.

7. Apparatus according to claim 5 or 6, **characterized** in that stop means are provided on the frame near both ends of the conveyor, the shaft or an abutment means connected thereto being adapted to strike against said stop means, and a drive motor being provided with a cos φ -control causing the direction of rotation of the drive motor to reverse when the abutment means contacts one of the stop means.

8. Apparatus according to claim 7, wherein the length of the conveyor is adjustable, **characterized** in that the stop means are secured to the frame in such a manner that the distance between them changes together with the length of the conveyor.

9. Apparatus according to one of claims 1-8, wherein the conveyor comprises a plurality of driven rollers arranged substantially parallel spaced from each other, the rollers being provided with notches such that the notches of adjacent rollers are positioned substantially opposite to each other and of each pair oppositely positioned notches of two rollers the planes defining apertures are substantially parallel in pairs, **characterized** in that the teeth of the gear wheels co-operate with the rollers at the position of the notches.

10. Apparatus according to one of the preceding claims, **characterized** in that the push-out means are adapted to the configuration of the apertures.

fig.1

fig.2

EP 0 344 851 A1

European Patent Office

# EUROPEAN SEARCH REPORT

Application Number

EP 89 20 1358

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-2 311 315  (ARTUR SIMON MASCHINENBAU GmbH) * Page 2, line 10 - page 3, line 18; page 5, line 1 - page 6, line 16; figures * | 1 | B 07 B   1/15 B 07 B   1/50 |
| Y | | 2,3 | |
| A | | 4,10 | |
| | --- | | |
| Y | US-A-4 287 064  (ANDO et al.) * Column 2, line 1 - column 3, line 6; figures * | 2,3 | |
| A | | 4-6 | |
| | --- | | |
| A | DE-A-2 946 312  (GERLACH) * Page 5, lines 1-6; page 9, line 10 - page 10, line 11; page 13, line 24 - page 14, line 16; figures 1,10 * | 1-4 | |
| | --- | | |
| A | DE-A-2 603 854  (DE GREEF B.V.) * Page 2, lines 12-26; figures 1-3 * | 1-3 | |
| | --- | | TECHNICAL FIELDS SEARCHED (Int. Cl.4) |
| D,A | NL-A-8 602 843  (MIEDEMA LANDBOUWWERKTUIGENFABRIEK B.V.) * Page 4, line 6 - page 5, line 36; page 6, lines 27-34; figures * | 1,2,9 | B 07 B A 01 D |

The present search report has been drawn up for all claims

| Place of search | Date of completion of the search | Examiner |
|---|---|---|
| THE HAGUE | 01-08-1989 | VAN DER ZEE W.T. |